**Europäisches Patentamt**

**European Patent Office**

**Office européen des brevets**

(19)

(11) Publication number: **0 028 517**
**B2**

(12)

# NEW EUROPEAN PATENT SPECIFICATION

(45) Date of publication of the new patent specification:
**18.10.89**

(51) Int. Cl.⁴: **C 08 F 279/02**

(21) Application number: **80303886.8**

(22) Date of filing: **31.10.80**

---

(54) A method of manufacturing rubber modified styrene resins and resins produced by such a method.

---

(30) Priority: **01.11.79 JP 140466/79**

(43) Date of publication of application:
**13.05.81 Bulletin 81/19**

(45) Publication of the grant of the patent:
**09.05.84 Bulletin 84/19**

(45) Mention of the opposition decision:
**18.10.89 Bulletin 89/42**

(84) Designated Contracting States:
**BE GB IT**

(56) References cited:
**DE-A- 1 520 691**
**DE-A- 1 745 504**
**GB-A- 766 585**
**GB-A- 1 063 603**
**GB-A- 1 165 052**
**US-A- 3 284 542**
**US-A- 3 448 175**
**US-A- 3 511 895**
**US-A- 3 660 535**
**US-A- 3 903 202**
**US-A- 3 945 976**
**US-A- 4 187 261**

The file contains technical information submitted after
the application was filed and not included in this
specification

(73) Proprietor: **MITSUI TOATSU CHEMICALS, Inc.,**
**2-5 Kasumigaseki 3-chome, Chiyoda-Ku Tokyo 100 (JP)**
Proprietor: **TOYO ENGINEERING CORPORATION, 2-5,**
**Kasumigaseki 3-chome, Chiyoda-ku, Tokyo 100 (JP)**

(72) Inventor: **Iwamoto, Mune, 2882, Iijima-cho Totsuka-ku,**
**Yokohama Kanagawa-ken (JP)**
Inventor: **Ito, Norifumi, 1071-2, Nakano-cho Totsuka-ku,**
**Yokohama Kanagawa.ken (JP)**
Inventor: **Ishida, Yuzuru, 2882, Iijima-cho Totsuka-ku,**
**Yokohama Kanagawa-ken (JP)**
Inventor: **Matsubara, Tetsuyuki, 1612, Kosugaya-cho**
**Totsuka-ku, Yokohama Kanagawa-ken (JP)**

(74) Representative: **Holdcroft, James Gerald, Dr. et al,**
**Graham Watt & Co. Riverhead, Sevenoaks Kent**
**TN13 2BN (GB)**

## Description

The present invention concerns a continuous method of manufacturing rubber modified styrene resins; and resins produced by such a method. It is one object of the present invention to manufacture rubber modified styrene resins with good impact resistance at the portions where polystyrene molecule orientation tends to occur in the resin when molded.

In the prior art, rubber modified styrene resins are manufactured by the continuous bulk polymerization or solution polymerization or by the batch type bulk-suspension polymerization method. As one of those methods, GB 1 165 052 discloses a bulk-suspension polymerization method of the batch type. However, the continuous bulk polymerization and solution polymerization methods are better from the viewpoints of consistent quality of the product in the industrial scale production and of reduced production costs. There have been proposed various methods for continuously manufacturing rubber modified styrene resin in the art. One of the methods using organic peroxide is disclosed in Japanese Patent Publication No. 37 233/1976. As the uses for rubber modified styrene resins are becoming more and more diversified and multiplied today, and the said resins are used as materials for molded produces of complex shapes, an important problem facing the industry concerned is to secure the impact strength at the portions where polystyrene molecule orientation tends to occur within the molded product.

The rubber modified styrene resins obtained by the prior manufacturing methods exhibit the problem that when molded into complex shapes certain portions tend to become severely damaged by the impact caused by for example dropping an object during acutal use. It has been found that the severely damaged portions are the portions where orientation of the polystyrene molecules tended to occur, and the results of falling weight impact tests, indicated a considerable reduction in the impact strength where polystyrene molecule orientation tends to occur in the molded product.

Generally the degree of orientation in the styrene resin molded product depends on the molding conditions, but it may also be improved by the manufacturing method of the resin itself.

The portions where polystyrene molecule orientation tends to occur in the molded product are the portions where excessive thermal contraction occurs at the time of heating (e.g. 80–120 °C) when the product is molded. The absolute amount of thermal contraction depends on the molding conditions, but it has been found that the impact strength at the portions with a relatively larger degree of thermal contraction is lower in molded products of complex shape.

Surprisingly, we have found that if the resin is manufactured by a continuous, bulk polymerization or solution polymerization, method where organic peroxide, an initiator for radical polymerization, is supplied under specifically restricted conditions, the impact strenght is observed to improve significantly at the portions where polystyrene molecule orientation tends to occur in the molded product.

The invention provides a method of continuously manufacturing rubber-modified styrene resins from a styrene monomer as herein defined and a polymer rubber comprising butadiene moieties, by bulk polymerization or solution polymerization using an organic peroxide as an initiator of radical polymerization, characterised by the steps of: (a) continuously supplying 100 parts by weight of styrene monomer 3 to 15 parts by weight of the polymer rubber and 0 to 0.01 parts by weight of organic peroxide per unit time to a first agitated polymerization reactor, and conducting polymerization until the polymerization yield of the styrene monomer in the polymerization reactor becomes 2 to 5 times the original weight of the polymer rubber; and (b) continuously feeding to a second polymerization reactor or to a plurality of such reactors connected in series, the full amount of polymer mixture discharged from step (a) 0 to 200 parts by weight of fresh styrene monomer, and 0.01 to 0.9 parts by weight of organic peroxide per unit time and conducting polymerization until the polymerization yield of the styrene monomer specific to step (b) becomes at least twice the polymerization yield of the styrene monomer in step (a), and wherein when step (b) is carried out in a plurality of reactors the whole of each of the polymer mixture from step (a), any fresh styrene monomer and the organic peroxide of step (b) are fed to the first reactor of the series.

The term "styrene monomer as herein defined" includes not only styrene monomers per se but also mixtures of styrene monomers with other monomers which can be radical polymerized with the styrene monomer; in such cases the numerical amounts of styrene monomer given herein each relate to the sum of the amount of styrene monomer per se and the amount of the other monomer or monomers.

The calculation of the yield figures will now be illustrated by reference to the results of Example 1 below:

The polymerization yield of styrene monomer in step (a) of Example 1 is 21% i.e. parts by weight per 100 parts by weight styrene monomer originally supplied in step (a); the original amount of polymer rubber supplied is 8 parts by weight per 100 parts by weight styrene monomer: thus the yield in step (a) is

$$\frac{21}{8} = 2.63$$

times the original weight of polymer rubber. The overall polymerization yield for steps (a) and (b) of Example 1 bis 81% of the total amount of styrene monomer supplied i.e.

$$\frac{81}{100} \times (100 + 45) = 117.45$$

parts by weight. Thus the polymerization yield specific to step (b) is

$$117.45 - 21 = 96.45$$

parts by weight or

$$\frac{96.45}{21} = 4.59$$

times the polymerization yield of styrene monomer in step (a).

The invention also provides a rubber modified styrene resin produced by a method according to the invention.

There now follows a description of preferred embodiments of the invention. This description, which is illustrative of method and product aspects of the invention, is given by way of example only, and not by way of limitation of the invention.

In embodiments of the invention a method of continuously manufacturing rubber modified styrene resins from a styrene monomer and a polymer rubber comprising butadine moieties by bulk polymerization or solution polymerization using an organic peroxide as an initiator or radical polymerization comprises the steps of (a) continuously supplying 100 parts by weight of styrene monomer, 3 to 15 parts by weight of the polymer rubber and 0. to 0.01 parts by weight of organic peroxide per unit time to a first agitated polymerization reactor, and conducting polymerization until the polymerization yield of the styrene monomer in the polymerization reactor becomes 2 to 5 times the original weight of the polymer rubber; and (b) continuously feeding to a second polymerization reactor the full amount of polymer mixture discharged from step (a), 0 to 200 parts by weight of fresh styrene monomer, and 0.01 to 0.9 parts by weight of organic peroxide per unit time and conducting polymerization until the polymerization yield of the styrene monomer specific to step (b) becomes at least (twice) the polymerization yield of the styrene monomer in step (a).

Step (a) may be carried out in a plurality of agitator type polymerization reactors connected in series, the whole of the styrene monomer and polymer rubber being supplied to the first reactor of the series and any organic peroxide employed in step (a) being supplied either wholly to the first reactor of the series or in divided portions to more than one of the reactors which may include the first reactor, for example to all the reactors.

Also step (b) may be carried out in a plurality of polymerization reactors connected in series, the whole of each of the polymer mixture from step (a), any fresh styrene monomer and the organic peroxide of step (b) being fed to the first reactor of the series.

The total amount of organic peroxide to be added as an initiator for radical polymerization in step (a) is preferably less than 0.003 parts by weight per 100 parts by weight of styrene monomer, and it will be realized there is the possibility of zero peroxide in step (a). When a resin manufactured by adding an organic peroxide in an amount exceeding 0.01 parts by weight is electron-micriscopically observed, numerous rubber particles having a finer diameter than those of a resin embodying the present invention are observed. Formation of such particles seems to detract from the present advantages. Preferably the amount of polymer rubber in step (a) is 4–12 parts by weight per 100 parts by weight of styrene monomer. In the method embodying the present invention, formation of rubber dispersing particles occurs in step (a) as is also known in the art. Outside the range of 3–15 parts by weight, diameter modification of the dispersing particles becomes difficult, the rubber particle diameters within the product resin fluctuate during the manufacturing operation, and it becomes difficult to obtain a product of stable quality.

The use of one or more agitator-type polymerization reactors connected in series in step (a) facilitates the above mentioned dispersing particle formation. There is no specific limitation placed on the number of agitated reactors which may be used. Polymerization of styrene monomer in step (a) is conducted in the sole or final reactor of step (a) preferably until the total polymerization yield of the styrene monomer is 2.3 to 3.5 times the original amount of polymer rubber supplied.

Organic peroxide is supplied in step (b) so that polymerization continues. In step (b) preferably up to 150 parts by weight, of the fresh styrene monomer is supplied to the sole or first reactor of step (b). This supply of styrene is useful in adjusting the rubber content in the product resin. When the supply exceeds 200 parts by weight, dispersion stability of rubber particles formed in step (a) deteriorates and adjustment of rubber particles diameter becomes difficult.

In step (b) 0.01–0.9 parts by weight of an organic peroxide per 100 parts by weight of the styrene monomer of step (a) are supplied to the sole or first reactor of step (b). We shall further explain the amount of the organic peroxide to be supplied. When the total amount of styrene monomer fed to step (b) i.e. the sum of the amount of unreacted styrene monomer in the polymerization liquid formed in step (a) and to be supplied to step (b) and the amount of the styrene monomer to be freshly supplied in step (b) is set at 100 parts by weight, then the amount of the organic peroxide to be supplied in step (b) should be selected to be within the range of 0.009 to 0.31 parts by weight or preferably in the range of 0.01 to 0.2 parts by weight. It appears that the use of at least 0.009 parts by weight of the peroxide ensures the formation of a certain reaction product in step (b), and such a reaction product works specifically on the polymer rubber converted to a specific state in step (a), thereby bringing about the present advantages. If the amount exceeds 0.31 parts by weight, the Izod Impact valve of the product resin becomes lowered, and there arise difficulties in its performance as an impact resistant resin. As indicated above the organic peroxide may be omitted in step (a) but when it is supplied in step (a), it does not matter whether the types of the organic peroxides used in steps (a) and (b) are the same or different. Also the range of 0.009-0.31 parts by weight is selected because the polymerization yield of the styrene monomer in step (a) is controlled by the weight of rubber, and also because the polymerization yield in step (b) is at least twice that in step (a), thus placing a limitation on the amount of the styrene monomer to be supplied in step (b). It follows that, in step (b) the amount of peroxide is limited to 0.01-0.9 parts by weight for 100 parts by weight of the styrene monomer supplied in step (a); i.e. this range of 0.01-0.9 corresponds to 0.009-0.31 on the basis of 100 parts by weight of total monomer supplied to step (b).

The polymerization yield of the styrene monomer in the step (b) is at least twice that in sept (a). If it is less than 1.5 times, it appears that the organic peroxide does not become fully active. The organic peroxide may be supplied to the steps (a) and (b) by dissolving in the styrene monomer to be fed, or in a solution of ethylbenzene or toluene, or by dispersing in a dispersing agent or fluidizing agent such as paraffin.

The organic peroxide used may be any which has a function of initiating polymerization for a styrene monomer such as methylethyl ketone peroxide, 1,1-bis(t-butylperoxy)3.3.5-trimethylcyclohexane, 1.1-bis(t-butylperoxy)cyclohexane, n-butyl-4.4-bis(t-butylperoxy) valerate, 2.2-bis(t-butylperoxy)butane, t-butyl hydroperoxide, cumene hydroperoxide, di-isopropyl benzene hydroperoxide, p-menthane hydroperoxide, 2.5-dimethylhexane 2.5-dihydroperoxide, 1.1.3.3-tetramethyl-butyl hydroperoxide, di-t-butyl peroxide, t-butylcumyl peroxide, di-cumyl peroxide, di-cumyl peroxide, $\alpha,\alpha'$-bis(t-butyl peroxyisopropyl)benzene, 2.5-dimethyl-2.5-di(t-butyl peroxy) hexane, 2.5-dimethyl-2.5-di(t-butyl peroxy) hexane-3, acetyl peroxide, t-butyl peroxy acetate, t-butyl peroxy isobutylate, t-butyl peroxy 2-ethyl hexanoate, t-butyl peroxy 3.5.5-trimethylhexanonate, t-butyl peroxy laurate, t-butyl peroxy benzoate, di-t-butyl diperoxy isophthalate, 2.5-dimethyl-2.5-di(benzoyl peroxy)hexane, t-butyl peroxy maleic acid, t-butyl peroxyisopropyl carbonate. One or a plurality of the above compounds may be used.

Examples of styrene monomers which may be used include styrene itself, alkyl styrenes e.g. methyl styrene, ethyl styrene, isopropyl styrene, halogenated styrenes e.g. chloro styrene, bromo styrene, halogenated alkyl styrene and mixtures of any of these monomers. In supplying the styrene monomer, it may be substituted in part with a monomer which can be radical-polymerized with styrene monomer. Examples of such monomers are acrylonitrile, methacrylonitrile, vinylidene cyanide, acrylic acid and alkyl esters of acrylic acid.

Examples of the polymer rubber are polybutadiene rubber manufactured by the emulsion polymerization method, and polybutadiene rubber manufactured by the solution polymerization method using a stereospecific catalyst or an organic lithium catalyst. When using such a polymer rubber, a portion thereof may be substituted by isoprene polymer or a styrenebutadiene copolymer rubber may be used.

In the present method examples of solvents which may be used in the polymerization include ethyltoluene, xylene and ethylxylene, diethylbenzene as well as ethylbenzene and toluene. Although there is no specific limit for the amount of such a solvent, it is preferred that the amount should not exceed 50 parts by weight for 100 parts by weight of styrene monomer supplied to the appropriate polymerization reactor. This is because the solution decreases the polymerization volume and because recovery of solution is rather labor consuming. It is believed that the present advantages arise from reacting an organic peroxide in step (b) with a butadiene polymer in a specific state resulting from step (a).

There are no limitations to be placed on the type or the structure of the single or plurality of reactors connected in series and used in the step (b). They may be agitator type reactors, or of the column type.

In the present method, a fluidizing agent such as paraffin, various types of antioxidants or a molecular weight regulator such as a mercaptan may be added to the polymerization reactors.

The rubber modified styrene resin obtained by the present method may be used alone, or in combination with other styrene resins depending on its intended use. The resin obtained by the present method may be used in combination with stabilizers generally used with styrene resins against the heat, light, and oxygen, flame retarding agents, plasticizers, coloring agents, lubricants, and antistatic agents.

In summary the present method improves the impact resistance of the portions where polystyrene molecule orientation is likely to occur in the molded products. This in not at all to be expected from the prior art and it has significant industrial utility.

Example 1
(i) Method of manfucture
Polymerization was conducted using an agitator type polymerization apparatus comprising three serially connected polymerization reactors. To the first polymerization reactor step (a) was continuously supplied 108 parts by weight per unit time of butadiene polymer rubber solution made up by dissolving 8 parts by weight of butadiene polymer rubber (Dien 55 available from Asahi Chemical Industry Co., Ltd. in 100 parts by weight of styrene, and to the second polymerization reactor step (b) were continuously supplied 45 parts by weight of styrene, 20 parts by weight of ethylbenzene, and 0.07 parts by weight of di-t-butyl peroxide. The polymerization temperature for each of the three polymerization reactors was set at 140°C, 130°C and 133°C respectively. Polymerization liquid from the third polymerization reactor was passed to a volatile matter removing device to remove unreacted monomer and ethylbenzene. This device was operated at a temperature of 220°C and at a degree of vacuum of 2666 Pa (20 torr). The polymerization yield of styrene monomer in the first polymerization reactor was 21%, while overall polymerization yield in the three reactors was 81%.

Accordingly, the rubber content of the product resin was 6.4%. In the following Example, the volatile matter removal was conducted under the identical conditions as in the present Example.

(ii) Molding and evaluation

Molding was conducted in the following manner. Using an injection molder, a dumb-bell test piece was molded at a molding temperature of 210°C. The dimensions were; length 21.5 cm, thickness 0.32 cm, width 2 cm at both ends and 1.3 cm at the center. The sprue was at one end portion of the dumb-bell and the diameter of the gate of the mold was 0.2 cm. At the same time, a notched Izod test piece was also molded. Evaluation of impact strength by the falling weight test at the portions where polystyrene orientation tendend to occur was conducted in the following manner.

In order to seek out the portions where polystyrene molecule orientation tends to occur in the said dumb-bell test piece, polystyrene resin with a molecular weight of 130,000 was molded under the same conditions as mentioned above as a standard product. The test piece taken from such a product was heated at 90°C for 6.5 hours, and the contraction ratios of various portions of the molded product were sought. At the end of the dumb-bell test piece opposite to the sprue end, the contraction in the direction of the length was 1% while it was 9% at the center. The contraction ratio at the center was extremely high suggesting that the center portion is where the polystyrene molecule orientation tends to occur most. Thus, by evaluation of the impact strength by the falling weight test at the center, the present advantages become apparent. Measurement of the falling weight impact strength was performed by dropping vertically a metallic weight at the center of the dumb-bell test piece placed horizontally, and by gradually increasing the height from which the weight was dropped, the height at which the test piece cracks was determined, and the sum of the height thus obtained and the weight of the metallic weight was used in evaluating the impact strength. For evaluating the general impact strength of the resin the Izod impact value was measured in a method similar to that of ASTM-D-256. The results are shown in the Table. Excellent effects are clearly observed.

Example 2

A polymerization apparatus of a similar type to that of Example 1 was used, and 100 parts by weight per unit time of styrene was supplied to the first polymerization reactor together with 10 parts by weight of butadiene polymer rubber. To the second polymerization reactor were supplied per unit time 80 parts by weight of styrene, 30 parts by weight of ethylbenzene, and 0.2 parts by weight of 2.5-dimethyl-2.5-di(t-butyl peroxy)hexane, and the polymerization temperature for each of the three polymerization reactors was set at 135°C, 130°C and 135°C respectively. The polymerization yield of styrene monomer in the first reactor was 29%, while overall polymerization yield in the three reactors was 84%. The rubber content of the product resin was 6.2%. The impact strenght was measured similarly as in Example 1. The Table shows the results thereof.

Example 3

A polymerization apparatus of a similar type as that of Example 1 was used, and for 100 parts by weight per unit time of styrene supplied to the first polymerization reactor, 5 parts by weight of butadiene polymer rubber was supplied to the first reactor; 20 parts by weight of styrene, 10 parts by weight of ethylbenzene, and 0.03 parts by weight of 2.5-dimethyl-2.5-di(benzoyl peroxy)hexane were supplied to the second polymerization reactor. The polymerization temperature for each of the three polymerization reactors was set at 132°C, 135°C and 135°C respectively. The polymerization yield of styrene in the first reactor was 19% while overall polymerization yield in the three reactors was 60%. The rubber content of the product resin was 6.5%. The impact strength was measured similarly as in Example 1. The Table shows the results thereof.

Example 4

Polymerization was conducted using an agitator type polymerization apparatus comprising a continuous series of four polymerization reactors. To the first reactor was continuously supplied 100 parts by weight per unit time of styrene, 7 parts by weight of butadiene polymer rubber, and 0.003 parts by weight of 2.5-dimethyl-2.5-di(t-butyl peroxy) hexane. To the third polymerization reactor was supplied 10 parts by weight per unit time of styrene, 13 parts by weight of ethylbenzene, and 0.05 parts by weight of 2.5-dimethyl-2.5-di(t-butyl peroxy)hexane. The polymerization temperature for each of the four polymerization reactors was set at 132°C, 132°C, 134°C and 140°C respectively. The polymerization yield of styrene monomer in the second polymerization reactor was 16%, while overall polymerization yield was 93%. The rubber content in the product resin was 6.4%. The evaluation similar to Example 1 was performed and the results are shown in the Table.

Example 5

Polymerization was conducted in a polymerization apparatus comprising two agitator type reactors and a third column-type, reactor all connected in series. To the first reactor was continuously supplied 107 parts by weight per unit time of polymer solution in which 7 parts by weight of butadiene polymer rubber for 100 parts by weight of styrene was dissolved. To the column reactor were supplied 20 parts by weight of per unit time of styrene, 20 parts by weight of ethylbenzene, and 0.05 parts by weight of 2.5-dimethyl-2.5-di(benzoyl peroxy)hexane. The temperature of the first and second reactors were set at 136°C, and the polymerization temperature at the outlet of the third reactor at 160°C. The polymerization yield of styrene monomer at the second reactor was 25% while overall polymerization yield in three stages was 90%. The rubber content in the product resin was 6.1%. The impact strength was measured similarly as in Example 1 and the results are shown in the Table.

Comparative Example 1

A polymerization apparatus of a similar construction to that of Example 1 was used, and the conditions identical to those of Example 1 were followed for supplying the starting material to the apparatus except that organic peroxide was not supplied to the second polymerization reactor. The reaction temperature of each of the three polymerization reactors was set at 140°C, 142°C and 142°C respectively. The polymerization yield of styrene in the first polymerization reactor was 19% while overall polymerization yield in the three reactors was 78%. Accordingly, the rubber content in the product resin was 6.6%. The impact strength determined similarly to Example 1 is shown in the Table.

Comparative Example 2

A polymerization apparatus of a similar construction to that of Example 1 was used, and the conditions identical to those of Example 2 were followed for supplying the starting material except that 2.5-dimethyl-2.5-di(t-butyl peroxide)hexane was not supplied to the second polymerization reactor, but 0.15 parts by weight of this substance was supplied to the first reactor. The reaction temperature at each polymerization reactor was set at 130°C, 136°C and 137°C respectively. The polymerization yield of styrene in the first reactor was 24%, while overall polymerization yield in three reactors was 81%. Accordingly, the rubber content of the product resin was 6.4%.

The impact strength was measured in a manner similar to that of Example 1, and the results are shown in the Table.

Comparative Example 3

The polymerization apparatus with an identical construction to that of Example 1 was used, and the raw materials were supplied under the conditions identical to those of Example 3. The polymerization temperature of each of the three polymerization reactors was set at 138°C, 130°C and 130°C respectively. The polymerization yield of styrene in the first polymerization reactor was 29% while overall polymerization yield in the three reactors was 60%. The rubber content in the product resin was 6.5%. The impact strength was measured similarly as in Example 1 and the results are shown in the Table.

Comparative Example 4

A polymerization vessel of a similar construction to Example 1 was used, and the polymer starting materials were supplied under the conditions identical to those of Example 1 except that the amount of di(t-butyl peroxide) supplied to the second polymerization reactor was chanded to 1.0 parts by weight per unit time for 100 parts by weight of styrene supplied per unit time to the first polymerization reactor. The reaction temperature at each of the polymerization reactors was set at 140°C, 130°C and 125°C respectively. The polymerization yield of styrene in the first polymerization reactor was 21% while overall polymerization yield in the three reactors was 78%. The rubber content of the product resin was 6.6%. The impact strength was measured in a manner similar to that of Example 1 and the results are shown in the Table.

Table

Impact strength evaluated by falling weight test of rubber modified styrene resin where orientation of styrene resin is likely to occur

| | | Examples: | | | | |
|---|---|---|---|---|---|---|
| | | 1 | 2 | 3 | 4 | 5 |
| Organic Peroxide Addition (parts by weight) | Step (a): | – | – | – | 0.003 | – |
| | Step (b): | 0.07 | 0.2 | 0.03 | 0.05 | 0.05 |
| Polymerization Yield in Step (a) (butadiene basis) (Times): | | 2.63 | 2.90 | 3.80 | 2.29 | 3.57 |
| Polymerization Yield in Step (b) relative to Step (a) (Times): | | 4.59 | 4.21 | 2.79 | 5.39 | 3.32 |
| Rubber Content %: | | 6.4 | 6.2 | 6.5 | 6.4 | 6.1 |
| Izod Test Impact Strength kg · cm/cm: | | 8.9 | 9.5 | 9.2 | 9.4 | 9.1 |
| Impact Strength evaluated by Falling Weight kg · cm: | | 19.5 | 21.4 | 20.3 | 18.5 | 24.0 |

Table (contd.)

| | | Comparative Examples: | | | |
|---|---|---|---|---|---|
| | | 1 | 2 | 3 | 4 |
| Organic Peroxide ⎱ Step (a): | | – | 0.15 | – | – |
| Addition (parts ⎰ Step (b): | | – | – | 0.03 | 1.0 |
| by weight) | | | | | |
| Polymerization Yield in Step (a) (butadiene basis) (Times): | | 2.38 | 2.40 | 5.80 | 2.63 |
| Polymerization Yield in Step (b) relative to Step (a) (Times): | | 4.95 | 5.08 | 1.48 | 4.38 |
| Rubber Content %: | | 6.6 | 6.4 | 6.5 | 6.6 |
| Izod Test Impact Strength kg · cm/cm: | | 8.9 | 9.4 | 9.0 | 5.2 |
| Impact Strength evaluated by Falling Weight kg · cm: | | 11.0 | 9.8 | 9.6 | 4.5 |

## Claims

1. A method of continuously manufacturing rubber-modified styrene resins from a styrene monomer as herein defined and a polymer rubber comprising butadiene moieties, by bulk polymerization or solution polymerization using an organic peroxide as an initiator of radical polymerization, characterised by the steps of: (a) continuously supplying 100 parts by weight of styrene monomer 3 to 15 parts by weight of the polymer rubber and 0 to 0.01 parts by weight of organic peroxide per unit time to a first agitated polymerization reactor, and conducting polymerization until the polymerization yield of the styrene monomer in the polymerization reactor becomes 2 to 5 times the original weight of the polymer rubber; and (b) continously feeding to a second polymerization reactor or to a plurality of such reactors connected in series, the full amount of polymer mixture dischared from step (a) 0 to 200 parts by weight of fresh styrene monomer, and 0.01 to 0.9 parts by weight of organic peroxide per unit time and conducting polymerization until the polymerization yield of the styrene monomer specific to step (b) becomes at least twice the polymerization yield of the styrene monomer in step (a), and wherein when step (b) is carried out in a plurality of reactors the whole of each of the polymer mixture from step (a), any fresh styrene monomer and the organic peroxide of step (b) are fed to the first reactor of the series.

2. A method according to claim 1 characterised in that step (a) is carried out in a plurality of agitator type polymerization reactors connected in series, the whole of the styrene monomer and butadiene polymer rubber being supplied to the first reactor of the series and any organic peroxide employed in step (a) being supplied either wholly to the first reactor of the series or in divided portions to more than one of the reactors.

3. A method according to claim 1 or claim 2, characterised in that the amount of any organic peroxide added to step (a) is less than 0.003 parts by weight.

4. A method according to any one of the preceding claims characterised in that the polymerization yield of the styrene monomer in step (a) is 2.3 to 3.5 times the original weight of the polymer rubber.

5. A method according to any one of the preceding claims characterised in that the amount of fresh styrene monomer in step (b) is up to 150 parts by weight.

6. A method according to any one of the preceding claims characterised in that the amount of the organic peroxide in step (b) is 0.01 to 0.2 parts by weight for 100 parts by weight of the total styrene monomer fed to step (b).

7. A rubber-modified styrene resin produced by a method according to any one of the preceding claims.

8. A rubber-modified styrene resin produced by a method according to any one of claims 1 to 6 and in molded form.

## Patentansprüche

1. Verfahren zur kontinuierlichen Herstellung von mit Kautschuk modifizierten Styrolharzen aus einem Styrolmonomeren der hierin definierten Art und einem Polymerkautschuk mit Butadienanteilen durch Polymerisation in Masse oder Lösungspolymerisation unter Verwendung eines organischen Peroxids als Initiator einer radikalischen Polymerisation, gekennzeichnet durch die Verfahrensstufen: (a) kontinuierliches Zuführen von 100 Gewichtsteilen eines Styrolmonomeren, 3 bis 15 Gewichtsteilen des Polymerkautschuks und 0 bis 0,01 Gewichtsteilen des organischen Peroxids pro Zeiteinheit zu einem ersten Rühr-Polymerisationsreaktor und Durchführen der Polymerisation, bis das Polymerisationsausmass des Styrolmonomeren im Polymerisationsreaktor das 2- bis 5-fache des ursprünglichen Gewichts des Polymerkautschuks beträgt, und (b) kontinuierliches Zuführen der aus der ersten Stufe (a) ausgetragenen Gesamtmenge des Polymergemisches, von 0 bis 200 Gewichtsteilen eines frischen Styrolmonomeren und 0,01 bis 0,9 Gewichtsteilen organischen Peroxids pro Zeiteinheit zu einem zweiten Polymerisationsreaktor oder zu einer Mehrzahl derartiger, in Reihe geschalteter Reaktoren und Durchführen der Polymerisation, bis das Polymerisationsausmass des für Stufe (b) spezifischen Styrolmonomeren zumindest das Zweifache des Polymerisationsausmasses des Styrolmonomeren in Stufe (a) beträgt, und wobei, wenn die Stufe (b) in einer Mehrzahl von Reaktoren durchgeführt wird, die Gesamtmenge eines jeden Polymergemisches aus der Stufe (a), etwaiges frisches Styrolmonomer und das organische Peroxid der Stufe (b) dem ersten Reaktor der Reihe zugeführt werden.

2. Verfahren nach Anspruch 1, dadurch gekennzeichnet, dass die Stufe (a) in einer Mehrzahl von in Reihe geschalteten Rührwerk-Polymerisationsreaktoren durchgeführt wird und die Gesamtheit des Styrolmonomeren und des Butadienpolymerkautschuks dem ersten Reaktor dieser Reihe und etwaiges in der ersten Stufe (a) verwendetes organisches Peroxid entweder im ganzen dem ersten Reaktor der Reihe oder in Teilmengen mehreren als einem der Reaktoren zugeführt werden.

3. Verfahren nach Anspruch 1 oder Anspruch 2, dadurch gekennzeichnet, dass die Menge an etwaigem in der Stufe (a) zugesetztem organischen Peroxid weniger als 0,003 Gewichtsteile beträgt.

4. Verfahren nach einem der vorhergehenden Ansprüche, dadurch gekennzeichnet, dass das Polymerisationsausmass des Styrolmonomeren in Stufe (a) das 2,3- bis 3,5-fache des ursprünglichen Gewichts des Polymerkautschuks beträgt.

5. Verfahren nach einem der vorhergehenden Ansprüche, dadurch gekennzeichnet, dass die Menge an frischem Styrolmonomer in Stufe (b) bis zu 150 Gewichtsteile beträgt.

6. Verfahren nach einem der vorhergehenden Ansprüche, dadurch gekennzeichnet, dass die Menge an organischem Peroxid in Stufe (b) 0,01 bis 0,2 Gewichtsteile zu 100 Gewichtsteilen des der Stufe (b) zugeführten Gesamtstyrolmonomers beträgt.

7. Mit Kautschuk modifiziertes Styrolharz, hergestellt nach einem Verfahren nach einem der vorhergehenden Ansprüche.

8. Mit Kautschuk modifiziertes Styrolharz, hergestellt nach einem Verfahren nach einem der Ansprüche 1 bis 6 und als Formkörper.

## Revendications

1. Un procédé de fabrication continu de résines de styrène modifiées au caoutchouc à partir d'un monomère de styrène tel que défini ici et un caoutchouc polymère comprenant des fractions de butadiène, par polymérisation en masse ou polymérisation en solution en utilisant un peroxyde organique comme amorceur de la polymérisation radicalaire caractérisé par les étapes de: (a) amener continuellement 100 parties en poids de monomère de styrène, 3 à 15 parties en poids de caoutchchouc polymère et 0 à 0,01 parties en poids de peroxyde organique par unité de temps vers un premier réacteur de polymérisation agité, et réaliser la polymérisation jusqu'à ce que le rendement de polymérisation du monomère de styrène dans le réacteur de polymérisation devienne 2 à 5 fois le poids de départ du caoutchouc polymère; et (b) amener continuellement vers un second réacteur de polymérisation ou vers une pluralité de tels réacteurs raccordés en série, la quantité totale de mélange polymère déchargé de l'étape (a), 0 à 200 parties en poids de monomère de styrène frais, et 0,01 à 0,9 parties en poids de peroxyde organique par unité de temps et réaliser la polymérisation jusqu'à ce que le rendement de polymérisation du monomère de styrène spéficique à l'étape (b) devienne au moins double du rendement de polymérisation du monomère de styrène à l'étape (a) et lorsque l'étape (b) est mise en oeuvre dans une pluralité de réacteurs, la totalité de chacun des mélanges polymère de l'étape (a), tout polymère de styrène frais et le peroxyde organique de l'étape (b) sont amenés dans le premier réacteur de la série.

2. Un procédé selon la revendication 1, caractérisé en ce que l'étape (a) est mise en oeuvre dans une pluralité de réacteurs de polymérisation du type à agitateur raccordés en série, la totalité de monomère de styrène et du caoutchouc polymère de butadiène étant amenée vers le premier réacteur de le série et tout peroxyde organique utilisé au course l'étape (a) étant fourni soit entièrement au premier réacteur de la série soit en parties divisées à plus d'un des réacteurs.

3. Un procédé selon la revendication 1 ou la revendication 2 caractérisé en ce que la quantité de tout peroxyde organique ajouté à l'étape (a) est inférieure à 0,003 parties en poids.

4. Un procédé selon l'une quelconque des revendications précédentes caractérisé en ce que le rendement de polymérisation du monomère de styrène dans l'étape (a) est 2,3 à 3,5 fois le poids de départ du caoutchouc polymère.

5. Un procédé selon l'une quelconque des revendications précédentes caractérisé en ce que la quantité de monomère de styrène frais dans l'étape (b) est jusqu'à 150 parties en poids.

6. Un procédé selon l'une quelconque des revendications précédentes caractérisé en ce que la quantité de peroxyde organique dans l'étape (b) est 0,01 à 0,2 parties en poids pour 100 parties en poids de monomère de styrène total amené à l'étape (b).

7. Une résine de styrène modifiée au caoutchouc produite par un procédé selon l'une quelconque des revendications précédentes.

8. Une résine de styrène modifiée au caoutchouc produite par un procédé selon l'une quelconque des revendications 1 à 6 et sous forme moulée.